(19) Europäisches Patentamt
European Patent Office
Office européen des brevets

(11) **EP 2 674 783 B1**

(12) **FASCICULE DE BREVET EUROPEEN**

(45) Date de publication et mention
de la délivrance du brevet:
**25.07.2018 Bulletin 2018/30**

(51) Int Cl.:
***G01S 19/42*** *(2010.01)*    ***G01S 19/22*** *(2010.01)*

(21) Numéro de dépôt: **13172095.5**

(22) Date de dépôt: **14.06.2013**

(54) **RÉCEPTEUR DE SIGNAUX SATELLITAIRES SERVANT À LA LOCALISATION**

SATELLITENSIGNALEMPFÄNGER, DER ZUR LOKALISIERUNG DIENT

SATELLITE SIGNAL RECEIVER USED FOR LOCATION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.06.2012 FR 1201711**

(43) Date de publication de la demande:
**18.12.2013 Bulletin 2013/51**

(73) Titulaire: **Thales
92400 Courbevoie (FR)**

(72) Inventeurs:
• **Revol, Marc
26027 Valence (FR)**
• **Depraz Depland, David
26027 Valence (FR)**

(74) Mandataire: **Brunelli, Gérald et al
Marks & Clerk France
Immeuble Visium
22, avenue Aristide Briand
94117 Arcueil Cedex (FR)**

(56) Documents cités:
**EP-A1- 1 775 599       FR-A1- 2 742 612
US-A1- 2012 119 951    US-B1- 7 382 313**

EP 2 674 783 B1

**Description**

La présente invention concerne un récepteur de signaux satellitaires servant à la localisation. Ces signaux satellitaires sont par exemple de type GNSS. Le récepteur est adapté pour être fixé à un support.

Dans le cadre des récepteurs de signaux satellitaires servant à la localisation, la présence d'éventuels trajets multiples, lentement variables et de fort niveau dégrade la réception des signaux satellitaire de localisation. Cette dégradation de la précision est due en particulier à la perturbation, de façon inhomogène, des mesures de la phase de code et de la phase de porteuse des signaux en provenance des satellites. Dans le cadre des applications marines, ces trajets multiples sont provoqués par la réflexion, sur les structures du navire ou sur la surface de l'eau, des signaux satellitaires. Toujours dans le cadre des applications marines, les systèmes de localisation satellitaire pour lesquels la dégradation de la précision est le plus problématique sont, par exemple, les systèmes utilisés pour réaliser des appontages.

Il est connu pour améliorer la performance de réception de signaux satellitaires, en présence de trajets multiples, d'ajouter un filtrage spatial. Ce filtrage spatial peut-être réalisé en utilisant une antenne de réception directive. Ces antennes sont connues sous l'acronyme anglais de « FRPA » pour Fixed Radiated Pattern Antenna signifiant antenne à diagramme de rayonnement fixe en français. Ces antennes permettent de réaliser un compromis entre les deux traitements suivants :

1) la détection des signaux satellitaires (ceux-ci arrivant généralement avec un angle d'élévation typiquement supérieur à 5°) et
2) la réjection des trajets multiples et des sources d'interférences (ceux-ci arrivant généralement avec un angle d'élévation typiquement inférieur à 10°).

Ces antennes sont de coût relativement réduit. Ce sont par exemple des antennes connues sont le nom anglais de « Choke-ring » (ou antennes à anneaux de garde) ou des antennes de type hélicoïdale. Les inconvénients majeurs des antennes à diagramme de rayonnement fixe de type FRPA sont que le compromis entre la détection des signaux satellitaires et la réjection des trajets multiples et des sources d'interférences est très difficile à réaliser à faible élévation, et également que de telles antennes à diagramme de rayonnement fixe ne permettent pas l'adaptation du récepteur aux modifications de l'environnement local de réception, ce qui peut impliquer des contraintes sur l'installation de l'antenne.

Il est aussi connu dans l'état de la technique de protéger l'antenne grâce à des structures mécaniques connues sous le nom anglais de « IMLP » pour « interférence Multipath Local Protection». Ces structures mécaniques permettent de mieux maîtriser les réflexions. Mais de telles structures présentent l'inconvénient majeur d'être encombrantes, typiquement un diamètre de 5 à 10 mètres et une hauteur de 2 à 3 mètres, d'être chères à cause des matériaux absorbants utilisés et de ne pas contribuer significativement à la réduction des interférences.

Il est également connu dans l'état de la technique de réaliser un filtrage fréquentiel et temporel. Ce filtrage est réalisé par un dispositif placé dans le récepteur. Le type de dispositif de filtrage utilisé dépend généralement de la nature de la perturbation. Afin de supprimer des interférences il est connu d'utiliser un filtrage analogique de type radio fréquence (afin de supprimer les interférences reçues hors de la bande du signal utile), ou de réaliser un filtrage sur les amplitudes connu sous le nom anglais de « pulse-blanking » (« blocage des puises » en français) dans le cas où les interférences sont pulsées et reçues dans la bande du signal utile ou encore un filtrage numérique fréquentiel en bande étroite. La différence entre le filtrage radio fréquence et le filtrage numérique fréquentiel est que le premier est généralement effectué sur le signal analogique à sa fréquence de réception à l'aide de filtres discrets de type céramique ou « SAW » pour « Surface Accoustic Wave » en anglais ou « onde acoustique de surface » en français, alors que le filtrage numérique fréquentiel n'est réalisé qu'une fois le signal numérisé et échantillonné, donc à plus basse fréquence (généralement à la fréquence intermédiaires, « FI »). Le filtrage numérique fréquentiel autorise notamment des filtrages adaptatifs qui ne sont pas réalisables en analogique et permettent de rejeter des interférences reçues dans la bande de réception utile. Afin de supprimer les perturbations provoquées par des trajets multiples, on utilise des estimateurs de temps reçu (connus aussi sous le nom de discriminateurs de code) adaptés aux déformations induites sur la fonction de corrélation, tels que, par exemple, les discriminateurs NC (signifiant « Narrow Correlator » en anglais ou « corrélateur étroit » en français), double delta (présenté par exemple dans le brevet référence FR 2 742 612), MEDLL (signifiant « Multipath Estimating Delay Lock Loop » en anglais ou « boucle à verrouillage de délai et d'estimation des multitrajets » en français). Il est également possible d'utiliser la méthode « SAGE » (signifiant « Space-Alternating Generalized Expectation Maximization » en anglais). Cependant, du fait de leur spécialisation, ces techniques ne sont optimales que dans un domaine restreint d'hypothèses relatives à la nature de la perturbation. Ces techniques nécessitent donc l'implémentation d'autant d'algorithmes dédiés que de types de perturbations différentes. Ceci impacte la qualité des mesures déterminées à partir des signaux reçus, notamment la stabilité des biais de phases et la cohérence entre la phase de code et la phase de porteuse. De plus, ce grand nombre d'algorithmes complique l'étape de validation des performances du système de localisation.

Il est également connu d'utiliser un traitement spatial adaptatif à base d'une antenne multiple (par exemple le traitement connu sous le nom anglais de « CRPA » pour « Controlled Reception Pattern Antenna » ou sous le nom d'antenne à formation de faisceaux). Une antenne multiple est une antenne constituée d'une pluralité d'antennes élémentaires. Ce traitement permet d'adapter le diagramme de réception de l'antenne, automatiquement et sans connaissance à priori de la configuration du site d'installation (en particulier sans connaissance de l'angle d'élévation de la direction d'arrivée des trajets multiples et des interférences). Cette adaptation permet de maximiser la puissance de réception des trajets directs et de minimiser la puissance de réception des trajets réfléchis et des interférences. Cependant ce traitement présente l'inconvénient d'augmenter la complexité des antennes et des différents éléments effectuant le traitement. De plus ce traitement nécessite la calibration des éléments analogiques du récepteur. Les éléments à calibrer sont en particulier les antennes et les différents éléments de la chaîne de radio fréquence.

La demande de brevet US2012/0119951 illustre aussi un récepteur de signaux satellitaires servant à la localisation (GNSS) selon l'état connu de la technique.

La présente invention vise donc à remédier à ces problèmes et propose un système de localisation ayant des performances améliorées en présence de trajets multiples, ne nécessitant pas d'antennes volumineuses, pouvant s'adapter dynamiquement à l'environnement et présentant une complexité calculatoire faible.

L'invention se rapporte à un récepteur de signaux satellitaires servant à la localisation et adapté pour être fixé sur un support. Ce récepteur comprend au moins une antenne pouvant recevoir les signaux satellitaires servant à la localisation, cette antenne comprenant au moins deux centres de phase mobiles. Le récepteur comprend aussi des moyens de détermination d'une localisation à partir desdits signaux satellitaires reçus et des moyens de déplacement adaptés pour déplacer les centres de phase, sélectionner l'un desdits centre de phase et déterminer une position du centre de phase sélectionné par rapport au support.

Le récepteur permet d'avoir des performances améliorées, car il permet de réduire les perturbations provoquées par ces multi-trajets et sources d'interférences, grâce au filtrage à court terme des erreurs de mesures de phase rapides induites par le mouvement contrôlé de l'antenne, ceci indépendamment de toute contrainte sur la direction d'arrivée des perturbations.

Dans ce cas, il est possible de disposer un centre de phase tous les 10 cm sur un cercle de 30 cm de rayon. La commutation d'un centre de phase vers un autre centre de phase est réalisée chaque seconde.

Cette architecture antenne permet une intégration facile de ce récepteur dans des systèmes existants ou une réutilisation facile de composants existants pour la réalisation du récepteur.

De plus la sélection d'un seul centre de phase parmi la pluralité de centre de phase de l'antenne permet de réaliser un « déplacement apparent » du centre de phase du signal de réception (ce qui permet de supprimer l'effet des trajets multiples).

Selon l'invention, les moyens de détermination sont adaptés pour déterminer une localisation, à partir de la position du centre de phase sélectionné par rapport au support. Cette position est transmise par les moyens de déplacement aux moyens de détermination. Les moyens de détermination prennent en compte cette position afin d'effectuer la correction de la variation de la phase du signal reçu provoquée par le déplacement du centre de phase sélectionné.

Ceci permet d'assurer la stabilité du centre de phase des signaux satellites utiles par une correction de phase correspondant à la position du capteur, au moment de sa sélection, par rapport à un point de référence quelconque de l'antenne. De plus la synchronisation de cette correction de phase avec le basculement de sélection du centre de phase permet d'éviter toute rupture de phase en réception. De plus par rapport à une pondération variable du signal reçu des différents centres de phase avant sommation de l'ensemble des signaux pondérés, l'invention ne présente pas le désavantage d'augmenter le bruit de phase sur le signal utile.

Selon un premier mode de réalisation de l'invention, les moyens de détermination d'une localisation comprennent des premiers sous-moyens de multiplication du signal satellitaire par un signal généré dans le récepteur et ayant une fréquence dépendant de la fréquence de la porteuse du signal satellitaire, afin d'obtenir un premier signal. Les moyens de détermination comprennent aussi des deuxièmes sous-moyens de multiplication du premier signal par un signal généré dans le récepteur et ayant une phase de porteuse dépendant de la position du centre de phase, afin d'obtenir un deuxième signal. Les moyens de détermination comprennent de plus des sous-moyens de démodulation du deuxième signal, afin d'obtenir un troisième signal. Enfin les moyens de détermination comprennent des sous-moyens d'intégration du troisième signal sur une période dépendant de la période de déplacement du centre de phase.

Selon un deuxième mode de réalisation de l'invention, les moyens de détermination d'une localisation comprennent des premiers sous-moyens de multiplication du signal satellitaire par un signal généré dans le récepteur et ayant une fréquence dépendant de la fréquence de la porteuse du signal satellitaire, afin d'obtenir un quatrième signal. Les moyens de détermination d'une localisation comprennent aussi des sous-moyens de démodulation du quatrième signal, afin d'obtenir un cinquième signal. Les moyens de détermination d'une localisation comprennent aussi des deuxièmes sous-moyens de multiplication du cinquième signal par un signal généré dans le récepteur et ayant une phase de porteuse dépendant de la position du centre de phase, afin d'obtenir un sixième signal. Enfin les moyens de détermination d'une localisation comprennent des sous-moyens d'intégration du sixième signal sur une période dépendant de la période de déplacement du centre de phase.

Ces deux architectures du récepteur proposées permettent une intégration facile de ce récepteur dans des systèmes existants ou une réutilisation facile de composants existants pour la réalisation du récepteur.

Avantageusement, les moyens de déplacement sont adaptés pour déplacer au moins une des antennes de réception.

Un exemple possible de déplacement de l'antenne dans ce cas est un mouvement circulaire d'une antenne située au bout d'un bras de 30cm. Ce mouvement circulaire est réalisé à 20°/sec. Ceci permet de parcourir approximativement une demi-longueur d'onde du signal de porteuse par seconde.

Cette architecture antenne permet une intégration facile de ce récepteur dans des systèmes existants ou une réutilisation facile de composants existants pour la réalisation du récepteur.

Avantageusement les deuxièmes sous-moyens de multiplication sont adaptés pour générer un signal ayant une fréquence dépendant de la projection du vecteur vitesse de déplacement du centre de phase dans la direction de réception du signal satellitaire

L'invention sera mieux comprise et d'autres avantages apparaîtront à la lecture de la description détaillée faite à titre d'exemple non limitatif et à l'aide des figures parmi lesquelles :

- la figure 1 présente le récepteur selon un aspect de l'invention
- la figure 2 présente le signal reçu directement et un signal reçu après une réflexion
- la figure 3 présente le dispositif de détermination d'une localisation suivant un aspect de l'invention
- la figure 4 présente un premier mode de réalisation du dispositif de détermination d'une localisation suivant un aspect de l'invention
- la figure 5 présente un deuxième mode de réalisation du dispositif de détermination d'une localisation suivant un aspect de l'invention
- la figure 6 présente un troisième mode de réalisation du dispositif de détermination d'une localisation suivant un aspect de l'invention
- la figure 7 présente un quatrième mode de réalisation du dispositif de détermination d'une localisation suivant un aspect de l'invention

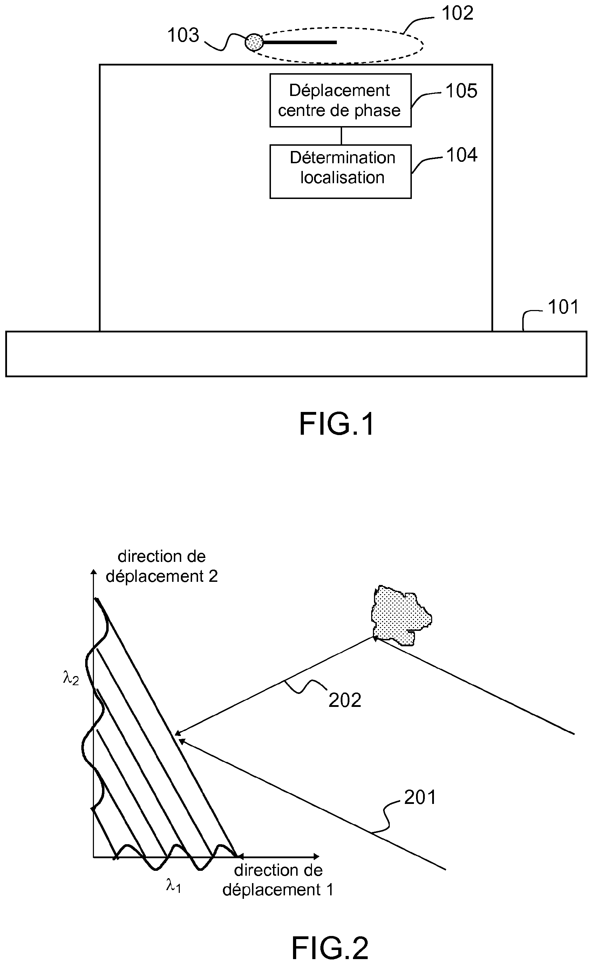

Le récepteur tel que présenté figure 1 peut-être fixé sur un support 101. Ce support est par exemple un véhicule terrestre, naval ou aérien mais il peut aussi être une station au sol. Le récepteur comporte une antenne 102 de réception d'un signal satellitaire servant à la localisation. Cette antenne comprend au moins un centre de phase mobile 103. Le centre de phase est un point théorique de l'antenne caractérisé par la stabilité de la réponse de phase en fonction de l'incidence du signal sur l'antenne selon l'azimut et l'élévation, généralement à la fréquence centrale de la bande utile de réception. Le récepteur comporte de plus un dispositif de détermination 104 d'une localisation à partir des signaux reçus. Des dispositifs permettant la détermination d'une localisation sont connus de l'homme du métier. Le récepteur comprend aussi un dispositif 105 de déplacement du centre de phase par rapport au support. Ce déplacement du centre de phase peut-être réalisé de manière mécanique ou bien par une commutation électronique sur un réseau de plusieurs antennes ayant des centres de phase différents. L'utilisation de la commutation électronique permet d'éviter des sources d'usure et de non fiabilité. Elle permet aussi d'utiliser toute l'étendue du réseau d'antennes, sans pour autant complexifier le traitement du récepteur (par rapport au cas d'un traitement d'antenne réseau classique qui nécessite le traitement simultané et parallèle des N capteurs du réseau d'antennes).

Le mouvement du centre de phase, crée une variation dans le bruit de phase qui en lui-même permet d'améliorer les performances de localisation. Cependant dans une version améliorée du système il est possible que le dispositif 104 de détermination d'une localisation soit adapté pour effectuer cette détermination en utilisant la position du centre de phase. Cette position du centre de phase est transmise au dispositif 104 de détermination d'une localisation par le dispositif 105 de déplacement.

Le récepteur, afin de limiter l'effet des trajets multiples et des sources d'interférences, utilise des antennes dont le centre de phase est mobile. Ce déplacement du centre de phase permet de créer un effet Doppler fictif sur le trajet réfléchi et les sources d'interférences. Cet effet Doppler fictif peut ensuite être éliminé par filtrage temporel (filtre de boucle de phase, filtre code-porteuse, ...). Selon le niveau de précision attendu, on peut aussi maintenir stationnaire la phase du signal satellitaire en compensant le mouvement de l'antenne vis à vis des axes du support. Ce mouvement du support peut être déterminé par modélisation a priori, mesuré sur le dispositif d'entraînement ou estimé avec des capteurs inertiels ou unités de mesures inertielles (UMI).

Grâce à ce déplacement, le signal reçu de manière direct du satellite a une phase stationnaire, alors que les signaux reçus après une ou plusieurs réflexions ou les signaux reçus des sources d'interférences ont une phase variant aléatoirement. Le déplacement du centre de phase provoque une rotation entre la phase du signal direct et la phase des signaux réfléchis ou des signaux interférents. Cette rotation de phase provoque alors des combinaisons constructives et destructives de la fonction d'autocorrélation du signal reçu. Ces variations de l'amplitude de la fonction d'autocorrélation peuvent facilement être supprimées par l'utilisation des boucles de poursuite des satellites (connu aussi sous l'acronyme anglais de « DLL » pour « Delay-locked loop ») ou par réduction de la bande de boucle (ceci étant équivalent à l'augmentation de la durée d'intégration).

Dans le cas d'un centre de phase mobile et d'un objet fixe provoquant une réflexion spéculaire. Le signal reçu résulte de la superposition d'un signal direct effectuant un trajet satellite vers antenne de réception et d'un signal réfléchi effectuant un trajet satellite vers plan de réflexion spéculaire puis plan de réflexion spéculaire vers antenne de réception. Le changement de la phase du signal reçu directement et du signal reçu après réflexion, dépend de la vitesse et de la direction de déplacement du centre de phase par rapport au plan de réception du signal reçu directement du satellite. La figure 2 présente un signal reçu directement 201 et un signal reçu après une réflexion 202.
Dans la suite du document on note :

- $\delta F_d$ la fréquence doppler du signal sur le trajet direct,
- $\delta F_r$ la fréquence doppler du signal sur le trajet réfléchi

On peut alors représenter $\delta F_d$ sous la forme $\delta F_d = F_0 \times \frac{V_{sa}}{c}$. Dans cette équation :

- $V_{sa}$ est la vitesse relative entre le satellite et le centre de phase de l'antenne de réception
- $c$ est la vitesse de la lumière
- $F_0$ est la fréquence de la porteuse du signal émis

La vitesse relative entre le satellite et le centre de phase de l'antenne de réception, dans l'axe à vue du satellite cet axe qui est défini par le vecteur unitaire $\vec{d}$, est de la forme :

$$V_{sa} = \left(\vec{V_s} - \vec{V_a}\right) \times \vec{d}$$

Dans l'équation précédente $\vec{V_s}$ représente le vecteur vitesse du satellite et $\vec{V_a}$ représente le vecteur vitesse de l'antenne. En utilisant l'expression précédente il est possible d'exprimer $\delta F_d$ sous la forme :

$$\delta F_d = F_0 \times \frac{V_{sa}}{c} = F_0 \times \frac{\left(\vec{V_s} - \vec{V_a}\right) \times \vec{d}}{c}$$

Dans le cas du signal réfléchi, le décalage de fréquence provoqué par l'effet Doppler résulte de l'addition du décalage de fréquence entre le satellite et le plan de réflexion spéculaire et du décalage de fréquence entre le plan de réflexion spéculaire et le centre de phase de l'antenne de réception. La fréquence du signal réfléchi est de la forme :

$$F_{rr} = F_0 \times \left(1 + \frac{V_{sr}}{c}\right) \times \left(1 + \frac{V_{ra}}{c}\right)$$

Dans l'équation précédente $V_{sr}$ représente la vitesse entre le satellite et le plan de réflexion et $V_{ra}$ la vitesse entre le plan de réflexion et l'antenne.
Le décalage en fréquence, du signal réfléchi, provoqué par l'effet Doppler est donc de la forme :

$$\delta F_r = F_0 \times \left(1 + \frac{V_{sr}}{c}\right) \times \left(1 + \frac{V_{ra}}{c}\right) - F_0 = F_0 \times \left(\frac{V_{sr} + V_{ra}}{c} + \frac{V_{sr} \times V_{ra}}{c^2}\right)$$

Dans le cas où l'on néglige le terme du second ordre l'expression est alors de la forme :

$$\delta F_r \approx F_0 \times \frac{V_{sr} + V_{ra}}{c}$$

La vitesse relative entre le plan de réflexion spéculaire et le centre de phase de l'antenne de réception, dans l'axe à vue du signal réfléchi qui est défini par le vecteur unitaire $\vec{r}$, est de la forme :

$$V_{ra} = \left(\vec{V_r} - \vec{V_a}\right) \times \vec{r}$$

Dans l'équation précédente $\vec{V_r}$ est le vecteur vitesse du plan de réflexion.

De même la vitesse relative entre le satellite et le plan de réflexion spéculaire, dans l'axe à vue du satellite qui est défini par le vecteur unitaire $\vec{d}$ et en considérant que la distance entre l'antenne de réception et le point de réflexion spéculaire est négligeable devant la distance entre le satellite et l'antenne de réception ou le point de réflexion spéculaire, est de la forme :

$$V_{sr} = \left(\vec{V_s} - \vec{V_r}\right) \times \vec{d}$$

Le décalage de fréquence, sur le trajet réfléchi, provoqué par l'effet Doppler appliqué s'écrit donc :

$$\delta F_r \approx F_0 \times \frac{V_{sr} + V_{ra}}{c} = F_0 \times \frac{\left(\vec{V_s} - \vec{V_r}\right) \times \vec{d} + \left(\vec{V_r} - \vec{V_a}\right) \times \vec{r}}{c}$$

Dans le cas où le plan de réflexion est fixe, alors $\vec{V_r}$ = 0, et donc l'expression précédente devient :

$$\delta F_r \approx F_0 \times \frac{\vec{V_s} \times \vec{d} - \vec{V_a} \times \vec{r}}{c}$$

Le signal reçu, combinaison du signal direct et du signal réfléchi, peut alors s'exprimer sous la forme :

$$S(t) = S_d(t) + S_r(t)$$

Avec

$$S_d(t) = A(t) \exp(2j\pi F_0 t) \exp(2j\pi \delta F_d t)$$

Et

$$S_r(t) = aA\big(t - \tau_0(t)\big) \exp\left(2j\pi F_0\big(t - \tau_0(t)\big)\right) \exp\left(2j\pi \delta F_r\big(t - \tau_0(t)\big)\right)$$

Les différentes variables utilisées dans les expressions précédentes sont les suivantes :

$A(t)$ : amplitude du signal direct reçu
$a$ : atténuation de l'amplitude du signal réfléchi
t : temps courant
$F_0$ : fréquence porteuse du signal émis
$\tau_0(t)$ : retard de propagation du trajet réfléchi spéculaire à l'instant t

En remplaçant les expressions des décalages en fréquence provoqués par l'effet Doppler on obtient :

$$S(t) = A(t) \, exp(2j\pi F_0 t) \, exp\left(2j\pi F_0 \times \frac{(\vec{V_s} - \vec{V_a}) \times \vec{d}}{c} t\right) + aA\big(t - \tau_0(t)\big)$$

$$\times \, exp\left(2j\pi F_0\big(t - \tau_0(t)\big)\right)$$

$$\times \, exp\left(2j\pi F_0 \times \frac{\vec{V_s} \times \vec{d} - \vec{V_a} \times \vec{r}}{c}\big(t - \tau_0(t)\big)\right)$$

Ou encore :

$$S(t) = exp(2j\pi F_0 t)\left[A(t) \, exp\left(2j\pi F_0 \times \frac{(\vec{V_s} - \vec{V_a}) \times \vec{d}}{c} t\right) + aA\big(t - \tau_0(t)\big)\right.$$

$$\times \, exp\left(2j\pi F_0 \frac{\vec{V_s} \times \vec{d} - \vec{V_a} \times \vec{r}}{c} t\right)$$

$$\left.\times \, exp\left(-2j\pi F_0\left(\frac{\vec{V_s} \times \vec{d} - \vec{V_a} \times \vec{r}}{c} + 1\right)\tau_0(t)\right)\right]$$

Dans le cas où l'on factorise le terme représentant le décalage de fréquence du à l'effet Doppler provoqué par le déplacement du satellite on obtient :

$$S(t) = exp\left(2j\pi F_0\left(1 + \frac{\vec{V_s} \times \vec{d}}{c}\right)t\right)$$

$$\times \left[A(t) exp\left(-2j\pi F_0 \times \frac{\vec{V_a} \times \vec{d}}{c} t\right) + aA\big(t - \tau_0(t)\big)\right.$$

$$\times \, exp\left(-2j\pi F_0 \times \frac{\vec{V_a} \times \vec{r}}{c} t\right)$$

$$\left.\times \, exp\left(2j\pi F_0 \times \left(\frac{\vec{V_s} \times \vec{d} - \vec{V_a} \times \vec{r}}{c} + 1\right)\tau_0(t)\right)\right]$$

L'expression précédente comporte un premier terme dépendant uniquement de la vitesse du satellite, un deuxième terme dépendant de la vitesse du porteur auquel s'ajoute un terme composite dont la phase dépend du déplacement de l'antenne par rapport au plan de réflexion spéculaire, qui constitue le terme d'erreur de phase lié au trajet réfléchi. Afin de simplifier l'expression on pose :

$$V_{rd} = \big(\vec{V_s} - \vec{V_a}\big) \times \vec{d}$$

$$V_{rr} = \vec{V_s} \times \vec{d} - \vec{V_a} \times \vec{r}$$

On obtient ainsi l'expression :

$$S(t) = \exp(2j\pi F_0 t)\left[A(t)\exp\left(2j\pi F_0 \times \frac{V_{rd}}{c}t\right) + aA\big(t - \tau_0(t)\big) \times \exp\left(2j\pi F_0 \frac{V_{rr}}{c}t\right)\right.$$

$$\left.\times \exp\left(-2j\pi F_0\left(\frac{V_{rr}}{c} + 1\right)\tau_0(t)\right)\right]$$

Le premier terme de l'expression représente le signal direct dont le terme de phase dépend du doppler relatif entre le satellite et l'antenne de réception. Le second terme représente le signal réfléchi retardé et déphasé de la valeur du doppler lié à la vitesse relative entre le point de réflexion spéculaire et l'antenne de réception.

Si maintenant on impose un mouvement $\overrightarrow{V_m}$ supplémentaire et connu par rapport au déplacement du porteur $\overrightarrow{V_p}$, on peut écrire :

$$\overrightarrow{V_a} = \overrightarrow{V_p} + \overrightarrow{V_m}$$

Soit en remplaçant, ce terme dans l'expression précédente de $S(t)$ on obtient:

$$S(t) = \exp\left(2j\pi F_0\left(1 + \frac{\overrightarrow{V_s} \times \vec{d}}{c}\right)t\right) \times \left[A(t)\exp\left(-2j\pi F_0 \times \frac{(\overrightarrow{V_p} + \overrightarrow{V_m}) \times \vec{d}}{c}t\right)\right.$$

$$+ aA\big(t - \tau_0(t)\big)$$

$$\times \exp\left(2j\pi F_0 \times \frac{(\overrightarrow{V_p} + \overrightarrow{V_m}) \times \vec{r}}{c}t\right)$$

$$\left.\times \exp\left(2j\pi F_0 \times \left(\frac{\overrightarrow{V_s} \times \vec{d} - (\overrightarrow{V_p} + \overrightarrow{V_m}) \times \vec{r}}{c} + 1\right)\tau_0(t)\right)\right]$$

Le mouvement relatif de l'antenne et le déplacement du satellite étant connus, il est possible de corriger leur contributions induites sur la phase du signal de réception, par compensation de cette phase par multiplication par le signal complexe conjugué $S_L(t)$ (signal local noté également équation 1) :

$$S_L(t) = \exp\left(-2j\pi F_0 \times \left(1 + \frac{\overrightarrow{V_s} \times \vec{d}}{c}\right)t\right)\exp\left(2j\pi F_0 \times \frac{\overrightarrow{V_m} \times \vec{d}}{c}t\right) \text{ (équation 1)}$$

Afin d'obtenir le signal $S_R(t) = S(t) \times S_L(t)$ de la forme :

$$S_R(t) = \exp\left(-2j\pi F_0 \times \frac{\overrightarrow{V_p} \times \vec{d}}{c}t\right)\left[A(t) + aA\big(t - \tau_0(t)\big)\right.$$

$$\times \exp\left(2j\pi F_0 \times \frac{(\overrightarrow{V_p} + \overrightarrow{V_m}) \times \vec{r} + (\overrightarrow{V_p} + \overrightarrow{V_m}) \times \vec{d}}{c}t\right)$$

$$\left.\times \exp\left(2j\pi F_0 \times \left(\frac{\overrightarrow{V_s} \times \vec{d} - (\overrightarrow{V_p} + \overrightarrow{V_m}) \times \vec{r}}{c} + 1\right)\tau_0(t)\right)\right]$$

Dans le cas où $A(t)$ est stationnaire et a une valeur $A$ l'équation devient :

$$S_R(t) = A\exp\left(-2j\pi F_0 \times \frac{\vec{V_p} \times \vec{d}}{c}t\right)\Bigg[1$$

$$+ a\exp\left(2j\pi F_0 \times \frac{(\vec{V_p}+\vec{V_m}) \times \vec{r} + (\vec{V_p}+\vec{V_m}) \times \vec{d}}{c}t\right)$$

$$\times \exp\left(2j\pi F_0 \times \left(\frac{\vec{V_s} \times \vec{d} - (\vec{V_p}+\vec{V_m}) \times \vec{r}}{c} + 1\right)\tau_0(t)\right)\Bigg]$$

Dans cette expression le premier terme représente le signal de mesure de déplacement du porteur attendu, le second terme représente un signal d'erreur inconnu. Ce signal d'erreur provient de la non connaissance des caractéristiques du plan de réflexion du trajet.

L'expression précédente peut encore être simplifiée afin d'obtenir l'équation 2 :

$$S_R(t) = A\exp\left(-2j\pi F_0 \times \frac{\vec{V_p}\times\vec{d}}{c}t\right) \times \left[1 + a\exp\left(2j\pi F_0 \times \frac{(\vec{V_p}+\vec{V_m})\times(\vec{r}+\vec{d})}{c}t\right) \times\right.$$

$$\left.\exp\left(2j\pi F_0 \times \left(\frac{\vec{V_s}\times\vec{d}-(\vec{V_p}+\vec{V_m})\times\vec{r}}{c} + 1\right) \times \tau_0(t)\right)\right] \text{(Equation 2)}$$

On note équation 3 l'équation décrivant le terme d'erreur $E_{Sr}(t)$ sous la forme

$$E_{Sr}(t) =$$

$$A\alpha\exp\left(-2j\pi F_0 \times \frac{\vec{V_p}\times\vec{d}}{c}t\right)\exp\left(2j\pi F_0 \times \left(\frac{(\vec{V_p}+\vec{V_m})\times(\vec{r}+\vec{d})}{c}\right)t\right) \times \exp\left(-2j\pi F_0 \times\right.$$

$$\left.\left(\frac{\vec{V_s}\times\vec{d}-(\vec{V_p}+\vec{V_m})\times\vec{r}}{c} + 1\right)\tau_0(t)\right) \text{(Equation 3)}$$

Si l'on se place dans le cas d'un récepteur fixe (par exemple une station d'observation des signaux au sol), pour lequel $\vec{V_p}$ = 0, dans ce cas le retard du trajet réfléchi sur une plan de réflexion fixe varie très lentement en fonction de l'élévation du satellite et donc :

$$E_{Sr}(t) = A\alpha\exp\left(2j\pi F_0 \times \left(\frac{\vec{V_m} \times (\vec{r}+\vec{d})}{c}\right)t\right)$$

$$\times \exp\left(-2j\pi F_0 \times \left(\frac{\vec{V_s} \times \vec{d} - \vec{V_m} \times \vec{r}}{c} + 1\right)\tau_0(t)\right)$$

Or comme $\dfrac{\vec{V_s}\times\vec{d}-\vec{V_m}\times\vec{r}}{c} \ll 1,$ car les vitesses de déplacement du satellite et du déplacement du centre de phase sont très faibles par rapport à $c$, alors :

$$E_{Sr}(t) \approx A(t)\alpha\exp\left(2j\pi F_0 \times \left(\frac{\vec{V_m} \times (\vec{r}+\vec{d})}{c}\right)t\right) \times \exp(2j\pi F_0\tau_0(t))$$

Typiquement la période de rotation de la phase, exp(2jπF$_0$τ$_0$(t)), liée à la variation de l'élévation du satellite est au moins supérieur à la minute.

Compte-tenu de la vitesse $\overrightarrow{V_m}$ imposée à l'antenne (de l'ordre de quelques dizaines de centimètres par seconde, selon la longueur d'onde de la porteuse du signal reçu), le premier terme introduit une variation de phase plus rapide qui permet ainsi à la boucle de phase du récepteur de filtrer le terme d'erreur de phase.

$$2j\pi F_0 \times \left(\frac{\overrightarrow{V_m} \times (\vec{r} + \vec{d})}{c}\right) t \gg 2j\pi F_0 \tau_0(t)$$

Dans le cas où le récepteur est installé sur un porteur mobile, l'équation 3 ci-dessus montre que le terme d'erreur, lié à la réflexion sur un objet fixe, apporte naturellement une variation rapide du terme de phase et est donc lui-aussi filtré par la boucle de phase du récepteur.

Cependant, le phénomène le plus gênant dans le cas d'un récepteur mobile provient de la réflexion du signal sur la structure même du porteur (ailes d'un aéronef, le kiosque d'un navire, ...), qui sont en fait solidaires du porteur et donc fixes par rapport à l'antenne.

L'introduction d'un mouvement volontaire sur l'antenne du porteur mobile joue alors le même rôle que dans le cas d'un récepteur fixe.

Le récepteur étant principalement asservi sur la phase du signal direct (ce signal étant généralement le plus puissant), c'est à dire le premier terme de l'équation 2 le terme d'erreur (voir en particulier l'équation 3) correspond aussi à l'erreur de phase de la boucle de poursuite en présence de trajet réfléchi, et doit donc être pris en compte pour dimensionner la bande de boucle de phase du récepteur.

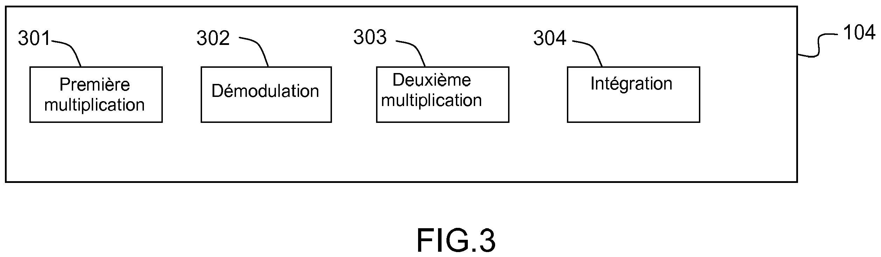

Le dispositif 104 de détermination d'une localisation tel que présenté sur la figure 3 comporte quatre unités (301, 302, 303, 304). L'unité 301 est adaptée pour effectuer une première multiplication du signal satellitaire par un signal généré en interne et ayant une fréquence dont la valeur est l'estimée de la fréquence de la porteuse du signal satellitaire reçu. L'unité 302 est adaptée pour démoduler un signal satellitaire. Des dispositifs de démodulation d'un signal satellitaire sont connus de l'homme du métier. Ils effectuent généralement une première étape de corrélation entre le signal et une reconstruction du signal généré en interne du récepteur. Ensuite ils effectuent une deuxième étape durant laquelle le signal corrélé est intégré sur une durée dépendante de la période du signal généré en interne du récepteur. La durée d'intégration élémentaire peut varier de 1ms à 20ms dans le cas des signaux satellitaires utilisant la norme GPS signifiant Global Positioning System en anglais ou système de localisation mondial en français, mais peut éventuellement atteindre 100ms dans le cas des signaux satellitaires utilisant la norme Galileo. En effet cette intégration est égale au maximum à la durée d'un « bit » de donnée (sinon, le changement de phase de la donnée dégrade le rapport signal à bruit), soit 20ms dans le cas des signaux utilisant la norme GPS. Par contre, dans le cas des signaux utilisant la norme Galileo, ou des signaux utilisant des futurs modifications de la norme GPS, le signal de données est modulé en quadrature de phase d'une voie « pilote » sans données, autorisant des durée d'intégration cohérente plus importante, jusqu'à 100ms (correspondant à la durée du code périodique de la voie pilote). L'unité 303 est adaptée pour effectuer une deuxième multiplication d'un signal par un signal, généré en interne du récepteur et ayant une phase de porteuse qui dépend de la position du centre de phase de l'antenne. Enfin une unité 304 effectue une intégration d'un signal sur une période de temps qui dépend de la période de déplacement du centre de phase.

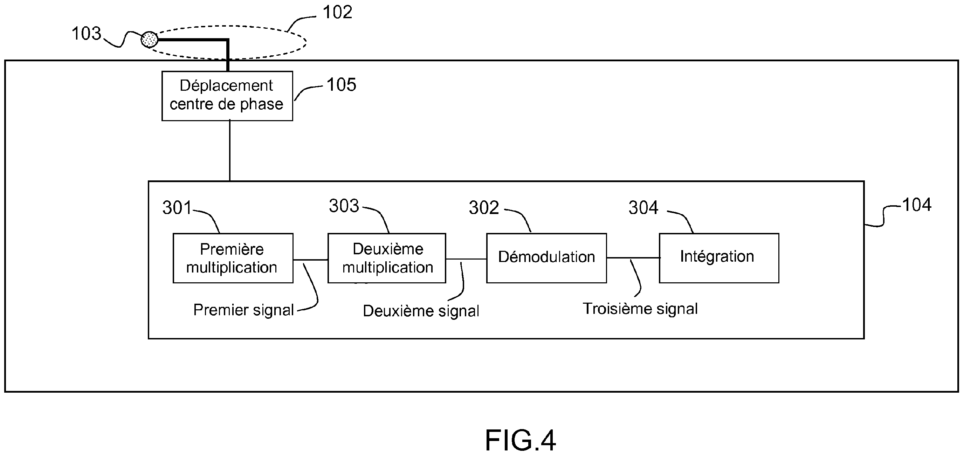

Dans un premier mode de réalisation représenté figure 4, le signal reçu de l'antenne mobile est d'abord multiplié, au moyen de l'unité 301, par un signal de la forme $\exp\left(-2j\pi F_0 \times \left(1 + \frac{\overrightarrow{V_s} \times \vec{d}}{c}\right) t\right)$ (voir en particulier équation 1). Dans cette équation les différentes variables représentent les éléments suivants :

- $\overrightarrow{V_s}$ : est la vitesse de déplacement de l'antenne du satellite (m/s)
- $c$ : Vitesse de l'onde radio (m/s)
- $F_0$ fréquence porteuse d'émission du signal (Hz)
- $\vec{d}$ : vecteur direction de l'axe à vue du satellite

Dans le cas où la vitesse du satellite n'est pas connue ou n'est pas parfaitement connue différentes valeurs de la fréquence de la porteuse sont testées de manière à parcourir l'ensemble des fréquences possibles de la porteuse. Cette multiplication permet d'obtenir un premier signal. Ensuite l'unité 303 permet de multiplier le premier signal par un signal, obtenu à partir de l'équation 1, de la forme $\exp\left(2j\pi F_0 \times \left(1 + \frac{\overrightarrow{V_m} \times \vec{d}}{c}\right) t\right),$ afin que la phase de la porteuse soit corrigée de l'effet du déplacement du centre de phase. Dans l'équation précédente les différentes variables représentent les éléments suivants :

- $\overrightarrow{V_m}$ : vecteur vitesse relatif du mouvement imposé à l'antenne par rapport au repère porteur
- $c$ : Vitesse de l'onde radio
- $F_0$ : fréquence porteuse d'émission du signal (Hz)
- $\vec{d}$ : vecteur direction de l'axe à vue du satellite

Cette multiplication permet d'obtenir un deuxième signal. Ensuite le deuxième signal est démodulé, au moyen de l'unité 302. Des dispositifs de démodulation sont connus de l'homme du métier. Ils comportent une première étape de corrélation entre le signal et une reconstruction du signal généré en interne du récepteur. Ensuite dans une deuxième étape le signal corrélé est intégré sur une durée dépendant de la période du signal générée en interne du récepteur. Cette intégration permet également d'utiliser la décorrélation des échantillons reçus, provoquée par le déplacement du récepteur ou du centre de phase. Avant la corrélation, le signal généré est décalé d'une valeur dépendant du retard du signal satellitaire reçu. Si ce retard n'est pas connu différentes hypothèses de décalage sont testées afin de trouver le retard du signal satellitaire reçu. Cette unité 302 permet d'obtenir un troisième signal. Enfin ce troisième signal est intégré, au moyen de l'unité 304. Cette intégration est effectuée sur une durée dépendant de la période de déplacement de l'antenne. Il faut intégrer sur durée au moins égale à une période du cycle de déplacement de l'antenne mobile, ceci de sorte à parcourir un cycle complet de l'erreur de phase de porteuse, permettant alors de moyenner l'erreur en sortie du discriminateur de code.

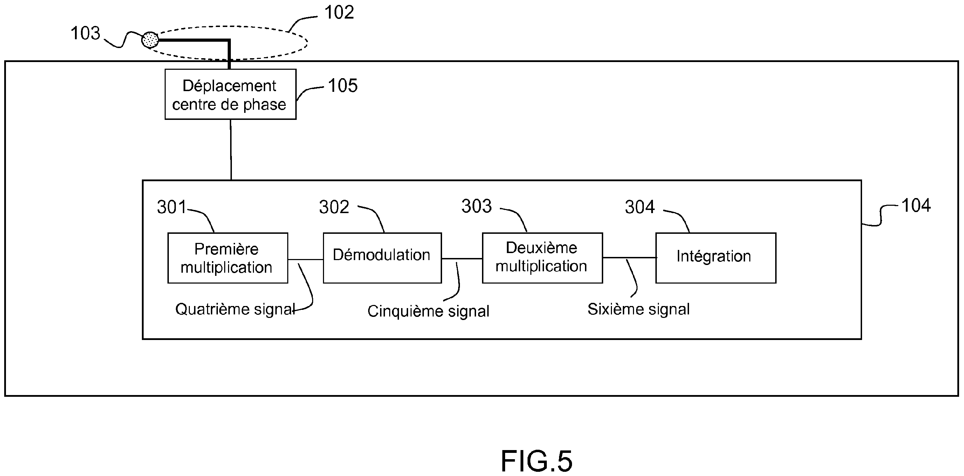

Dans un deuxième mode de réalisation représenté figure 5, le signal reçu de l'antenne mobile est d'abord multiplié, au moyen de l'unité 301, par un signal de la forme $\exp\left(-2j\pi F_0 \times \left(1 + \frac{\overrightarrow{V_s}\times\vec{d}}{c}\right)t\right)$ (voir en particulier équation 1). Dans cette équation les différentes variables représentent les éléments suivants :

- $\overrightarrow{V_s}$ : est la vitesse de déplacement de l'antenne du satellite (m/s)
- $c$ : Vitesse de l'onde radio (m/s)
- $F_0$ : fréquence porteuse d'émission du signal (Hz)
- $\vec{d}$ : vecteur direction de l'axe à vue du satellite

Dans le cas où la vitesse du satellite n'est pas connue, ou n'est pas parfaitement connue, différentes valeurs de la fréquence de la porteuse sont testées de manière à parcourir l'ensemble des fréquences possibles de la porteuse. Cette multiplication permet d'obtenir un quatrième signal. Ensuite ce quatrième signal est démodulé, au moyen de l'unité 302. Des dispositifs de démodulation sont connus de l'homme du métier. Ils comportent une première étape de corrélation entre le signal et une reconstruction du signal généré en interne du récepteur. Ensuite dans une deuxième étape le signal corrélé est intégré sur une durée dépendant de la période du signal généré en interne du récepteur. Cette intégration permet également d'utiliser la décorrélation des échantillons reçus, provoquée par le déplacement du récepteur ou du centre de phase. Avant la corrélation, le signal généré est décalé d'une valeur dépendante du retard du signal satellitaire reçu. Si ce retard n'est pas connu, différentes hypothèses de décalage sont testées afin de trouver le retard du signal satellitaire reçu. L'unité 302 de démodulation permet d'obtenir un cinquième signal. Ensuite le cinquième signal est multiplié, au moyen de l'unité 303, par un signal obtenu à partir de l'équation 1, de la forme $\exp\left(2j\pi F_0 \times \left(1 + \frac{\overrightarrow{V_m}\times\vec{d}}{c}\right)t\right.$ ), afin que la phase de la porteuse soit corrigée de l'effet du déplacement du centre de phase. Dans l'équation précédente les différentes variables représentent les éléments suivants :

- $\overrightarrow{V_m}$ : vecteur vitesse relatif du mouvement imposé à l'antenne par rapport au repère porteur
- $c$ : Vitesse de l'onde radio
- $F_0$ : fréquence porteuse d'émission du signal (Hz)
- $\vec{d}$ : vecteur direction de l'axe à vue du satellite

Cette multiplication permet d'obtenir un sixième signal. Enfin ce sixième signal est intégré, au moyen de l'unité 304. Cette intégration est effectuée sur une durée dépendante de la période de déplacement de l'antenne. Il faut intégrer sur durée au moins égale à une période du cycle de déplacement de l'antenne mobile, ceci de sorte à parcourir un cycle complet de l'erreur de phase de porteuse, permettant alors de moyenner l'erreur en sortie du discriminateur de code.

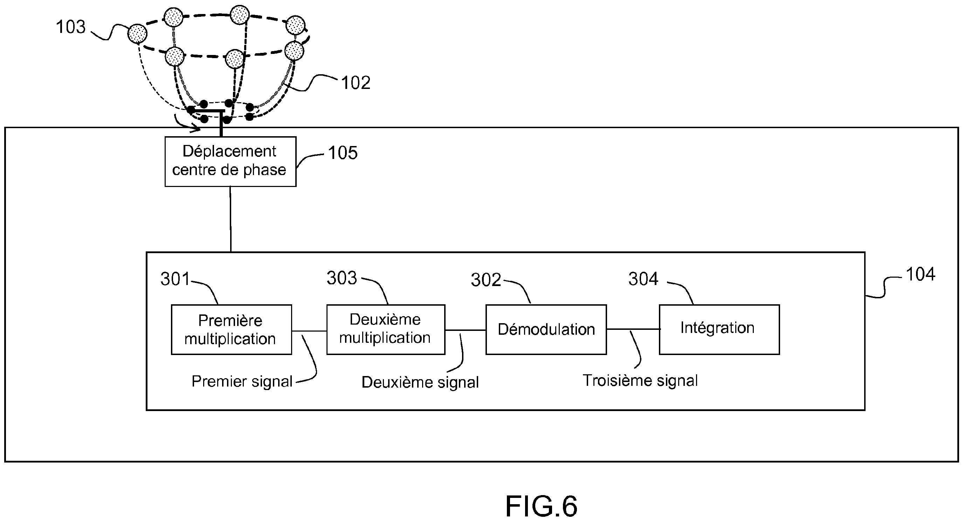

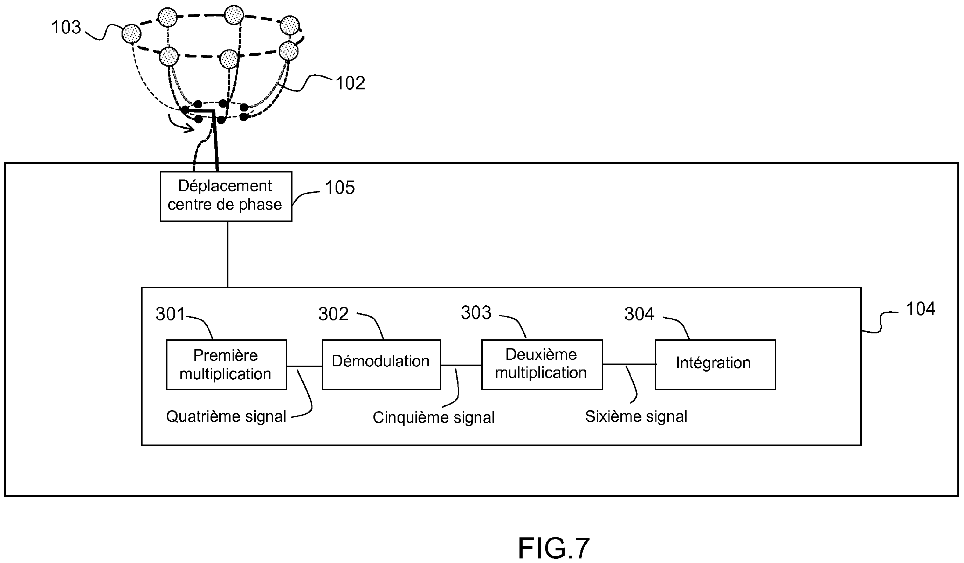

Dans les deux autres modes de réalisation présentés figure 6 et 7, l'antenne 102 possède plusieurs centres de phases 103. Ceci est par exemple réalisable si l'antenne 102 est constituée d'un ensemble d'antennes élémentaires. Ces antennes élémentaires constituent un réseau d'antennes ponctuelles de positions différentes et connues. Ces différentes antennes élémentaires sont utilisées successivement dans le temps. Les signaux issus de ces antennes sont distribués séquentiellement vers l'entrée du dispositif 103 de détermination d'une localisation. Cette distribution séquentielle est réalisée par un commutateur électronique. L'antenne n'est donc pas soumise à un mouvement physique ce qui facilite son montage mécanique, améliore la fiabilité de l'installation, facilite son entretien et évite les phénomènes d'usure (en particulier grâce à l'absence de moteur pour assurer le déplacement). Une fois l'installation du réseau d'antennes référencée spatialement (en particulier après avoir déterminé la position géographique et l'orientation des différentes antennes élémentaires), le choix de l'une des antennes est assuré par une commutation synchronisée avec le dispositif 103 de détermination d'une localisation. On peut alors effectuer une compensation de l'effet du déplacement du centre de phase, en utilisant des traitements identiques à ceux utilisés dans les deux premiers modes de réalisation (figure 3 et figure 4). De plus, afin d'améliorer le système et de limiter les ruptures de phases liées aux transitions de commutation, l'unité 304 d'intégration doit réaliser l'intégration de manière synchrone avec les commutations des signaux d'entrée.

**Revendications**

1. Récepteur de signaux satellitaires servant à la localisation (GNSS) adapté pour être fixé sur un support (101) comprenant ;

   - au moins une antenne (102) pouvant recevoir lesdits signaux satellitaires servant à la localisation, ladite antenne comprenant au moins deux centres de phase mobiles (103),
   - des moyens de détermination (104) d'une localisation à partir desdits signaux satellitaires reçus,

   ledit récepteur étant **caractérisé en ce qu'**il comprend :

   - des moyens de déplacement (105) adaptés pour déplacer lesdits centres de phase, sélectionner l'un desdits centre de phase et déterminer une position dudit centre de phase sélectionné par rapport au support,

   lesdits moyens de détermination (104) étant adaptés pour déterminer une localisation, à partir de ladite position dudit centre de phase sélectionné par rapport au support, transmise par lesdits moyens de déplacement (105), par correction d'une variation de la phase du signal reçu, la variation étant provoquée par le déplacement du centre de phase sélectionné,
   lesdits moyens de détermination (104) d'une localisation comprenant :

   - des premiers sous-moyens de multiplication (301) dudit signal satellitaire par un signal généré dans le récepteur et ayant une fréquence dépendant de la fréquence de la porteuse dudit signal satellitaire, afin d'obtenir un premier signal,
   - des deuxièmes sous-moyens de multiplication (303) dudit premier signal par un signal généré dans le récepteur et ayant une phase de porteuse dépendant de ladite position dudit centre de phase, afin d'obtenir un deuxième signal,
   - des sous-moyens de démodulation (302) dudit deuxième signal, afin d'obtenir un troisième signal,
   - des sous-moyens d'intégration (304) dudit troisième signal sur une période dépendant de la période de déplacement dudit centre de phase.

2. Récepteur de signaux satellitaires servant à la localisation (GNSS) adapté pour être fixé sur un support (101) comprenant ;

   - au moins une antenne (102) pouvant recevoir lesdits signaux satellitaires servant à la localisation, ladite antenne comprenant au moins deux centres de phase mobiles (103),
   - des moyens de détermination (104) d'une localisation à partir desdits signaux satellitaires reçus,

   ledit récepteur étant **caractérisé en ce qu'**il comprend :

   - des moyens de déplacement (105) adaptés pour déplacer lesdits centres de phase, sélectionner l'un desdits centre de phase et déterminer une position dudit centre de phase sélectionné par rapport au support,

lesdits moyens de détermination (104) étant adaptés pour déterminer une localisation, à partir de ladite position dudit centre de phase sélectionné par rapport au support, transmise par lesdits moyens de déplacement (105), par correction d'une variation de la phase du signal reçu, la variation étant provoquée par le déplacement du centre de phase sélectionné,

lesdits moyens de détermination (104) d'une localisation comprenant :

- des premiers sous-moyens de multiplication (301) dudit signal satellitaire par un signal généré dans le récepteur et ayant une fréquence dépendant de la fréquence de la porteuse dudit signal satellitaire, afin d'obtenir un quatrième signal,
- des sous-moyens de démodulation (302) dudit quatrième signal, afin d'obtenir un cinquième signal,
- des deuxièmes sous-moyens de multiplication (303) dudit cinquième signal par un signal généré dans le récepteur et ayant une phase de porteuse dépendant de ladite position dudit centre de phase, afin d'obtenir un sixième signal,
- des sous-moyens d'intégration (304) dudit sixième signal sur une période dépendant de la période de déplacement dudit centre de phase.

3. Récepteur selon l'une quelconque des revendications 1 ou 2, dans lequel lesdits moyens de déplacement (105) sont adaptés pour déplacer au moins une desdites antennes de réception (102)

4. Récepteur selon l'une des revendications précédentes, dans lequel lesdits deuxièmes sous-moyens de multiplication (303) sont adaptés pour générer un signal ayant une fréquence dépendant de la projection du vecteur vitesse de déplacement dudit centre de phase (102) dans la direction de réception dudit signal satellitaire.

**Patentansprüche**

1. Satellitensignalempfänger, der zur Lokalisierung dient (GNSS), ausgelegt zum Fixieren an einem Substrat (101), der Folgendes umfasst:

- wenigstens eine Antenne (102), die die zur Lokalisierung dienenden Satellitensignale empfangen kann, wobei die Antenne wenigstens zwei mobile Phasenzentren (103) umfasst,
- Mittel (104) zum Bestimmen einer Lokalisierung auf der Basis der empfangenen Satellitensignale,

wobei der Empfänger **dadurch gekennzeichnet ist, dass** er Folgendes umfasst:

- Bewegungsmittel (105), ausgelegt zum Bewegen der Phasenzentren, Wählen eines der Phasenzentren und Bestimmen einer Position des gewählten Phasenzentrums in Bezug auf das Substrat,

wobei die Bestimmungsmittel (104) ausgelegt sind zum Bestimmen einer Lokalisierung auf der Basis der Position des gewählten Phasenzentrums mit Bezug auf das Substrat, übertragen durch die Bewegungsmittel (105), durch Korrigieren einer Variation der Phase des empfangenen Signals, wobei die Variation durch die Bewegung des gewählten Phasenzentrums hervorgerufen wird,
wobei die Mittel (104) zum Bestimmen einer Lokalisierung Folgendes umfassen:

- erste Untermittel (301) zum Multiplizieren des Satellitensignals mit einem Signal, das im Empfänger erzeugt wird und eine Frequenz hat, die von der Frequenz des Trägers des Satellitensignals abhängig ist, um ein erstes Signal zu erhalten,
- zweite Untermittel (303) zum Multiplizieren des ersten Signals mit einem Signal, das im Empfänger erzeugt wird und eine Trägerphase hat, die von der Position des Phasenzentrums abhängig ist, um ein zweites Signal zu erhalten,
- Untermittel (302) zum Demodulieren des zweiten Signals, um ein drittes Signal zu erhalten,
- Untermittel (304) zum Integrieren des dritten Signals auf einer Periode, die von der Bewegungsperiode des Phasenzentrums abhängig ist.

2. Satellitensignalempfänger, der zur Lokalisierung dient (GNSS), ausgelegt zum Fixieren an einem Substrat (101), der Folgendes umfasst:

- wenigstens eine Antenne (102), die die zur Lokalisierung dienenden Satellitensignale empfangen kann, wobei die Antenne wenigstens zwei mobile Phasenzentren (103) umfasst,
- Mittel (104) zum Bestimmen einer Lokalisierung auf der Basis der empfangenen Satellitensignale,

wobei der Empfänger **dadurch gekennzeichnet ist, dass** er Folgendes umfasst:

- Bewegungsmittel (105), ausgelegt zum Bewegen der Phasenzentren, Wählen eines der Phasenzentren und Bestimmen einer Position des gewählten Phasenzentrums mit Bezug auf das Substrat,

wobei die Bestimmungsmittel (104) zum Bestimmen einer Lokalisierung auf der Basis der Position des gewählten Phasenzentrums mit Bezug auf das Substrat ausgelegt sind, übertragen durch die Bewegungsmittel (105), durch Korrigieren einer Variation der Phase des empfangenen Signals, wobei die Variation durch die Bewegung des gewählten Phasenzentrums hervorgerufen wird,
wobei die Mittel (104) zum Bestimmen einer Lokalisierung Folgendes umfassen:

- erste Untermittel (301) zum Multiplizieren des Satellitensignals mit einem Signal, das im Empfänger erzeugt wird und eine Frequenz hat, die von der Frequenz des Trägers des Satellitensignals abhängig ist, um ein viertes Signal zu erhalten,
- Untermittel (302) zum Demodulieren des vierten Signals, um ein fünftes Signal zu erhalten,
- zweite Untermittel (303) zum Multiplizieren des fünften Signals mit einem Signal, das im Empfänger erzeugt wird und eine Trägerphase hat, die von der Position des Phasenzentrums abhängig ist, um ein sechstes Signal zu erhalten,
- Untermittel (304) zum Integrieren des sechsten Signals auf einer Periode, die von der Bewegungsperiode des Phasenzentrums abhängig ist.

3. Empfänger nach Anspruch 1 oder 2, bei dem die Bewegungsmittel (105) zum Bewegen wenigstens einer der Empfangsantennen (102) ausgelegt sind.

4. Empfänger nach einem der vorherigen Ansprüche, bei dem die zweiten Multiplikationsuntermittel (303) zum Erzeugen eines Signals mit einer Frequenz ausgelegt sind, die von der Projektion des Bewegungsgeschwindigkeitsvektors des Phasenzentrums (102) in der Empfangsrichtung des Satellitensignals abhängig ist.


**Claims**

1. Satellite signal receiver used for location (GNSS) adapted to be fixed on a support (101) comprising:

- at least one antenna (102) able to receive said satellite signals used for location, said antenna comprising at least two movable phase centres (103);
- determination means (104) for determining a location on the basis of said received satellite signals,

said receiver being **characterised in that** it comprises:

- displacement means (105) adapted to displace said phase centres, to select one of said phase centres and to determine a position of said selected phase centre relative to the support,

said determination means (104) being adapted to determine a location, on the basis of said position of said selected phase centre relative to the support, transmitted by said displacement means (105), by correcting a variation in the phase of the received signal, the variation being caused by the displacement of the selected phase centre,
said determination means (104) for determining a location comprising:

- first sub-means (301) for multiplying said satellite signal by a signal generated in the receiver and having a frequency dependent on the frequency of the carrier of said satellite signal, in order to obtain a first signal;
- second sub-means (303) for multiplying said first signal by a signal generated in the receiver and having a carrier phase dependent on said position of said phase centre, in order to obtain a second signal;
- sub-means (302) for demodulating said second signal, in order to obtain a third signal;
- sub-means (304) for integrating said third signal over a period dependent on the displacement period of said phase centre.

2. Satellite signal receiver used for location (GNSS) adapted to be fixed on a support (101) comprising:

- at least one antenna (102) able to receive said satellite signals used for location, said antenna comprising at least two movable phase centres (103);
- determination means (104) for determining a location on the basis of said received satellite signals,

said receiver being **characterised in that** it comprises:

- displacement means (105) adapted to displace said phase centres, to select one of said phase centres and to determine a position of said selected phase centre relative to the support,

said determination means (104) being adapted to determine a location, on the basis of said position of said selected phase centre relative to the support, transmitted by said displacement means (105), by correcting a variation in the phase of the received signal, the variation being caused by the displacement of the selected phase centre, said determination means (104) for determining a location comprising:

- first sub-means (301) for multiplying said satellite signal by a signal generated in the receiver and having a frequency dependent on the frequency of the carrier of said satellite signal, in order to obtain a fourth signal;
- sub-means (302) for demodulating said fourth signal, in order to obtain a fifth signal;
- second sub-means (303) for multiplying said fifth signal by a signal generated in the receiver and having a carrier phase dependent on said position of said phase centre, in order to obtain a sixth signal;
- sub-means (304) for integrating said sixth signal over a period dependent on the displacement period of said phase centre.

3. Receiver according to any one of claims 1 or 2, wherein said displacement means (105) are adapted to displace at least one of said reception antennae (102).

4. Receiver according to any one of the preceding claims, wherein said second multiplication sub-means (303) are adapted to generate a signal with a frequency dependent on the projection of the displacement speed vector of said phase centre (102) in the direction of reception of said satellite signal.

FIG.1

FIG.2

FIG.3

FIG.4

FIG.5

EP 2 674 783 B1

FIG.6

FIG.7

EP 2 674 783 B1

## RÉFÉRENCES CITÉES DANS LA DESCRIPTION

**Documents brevets cités dans la description**

- FR 2742612
- US 20120119951 A